(19) Europäisches Patentamt
European Patent Office
Office européen des brevets

(11) Numéro de publication: **0 290 354**
**A2**

(12) # DEMANDE DE BREVET EUROPEEN

(21) Numéro de dépôt: **88420057.7**

(22) Date de dépôt: **22.02.88**

(51) Int. Cl.$^4$: **A 01 N 43/40**
//(A01N43/40,41:06,37:48)

(30) Priorité: **24.02.87 US 17548**

(43) Date de publication de la demande:
**09.11.88 Bulletin 88/45**

(84) Etats contractants désignés:
**AT BE CH DE ES FR GB GR IT LI LU NL SE**

(71) Demandeur: **RHONE-POULENC AGROCHIMIE**
**14-20, rue Pierre Baizet**
**F-69009 Lyon (FR)**

(72) Inventeur: **Decor, Jean Pierre**
**Chemin de la Croix Blanche La Pierre**
**Soucieux en Jarret F-69510 Thurins (FR)**

**Borrod, Guy**
**38 Bis rue des Granges**
**F-69005 Lyon (FR)**

**Dufour, Jean Paul**
**6 Passage d'Oucieux**
**Chazay d'Azergues F-69380 Lozanne (FR)**

(74) Mandataire: **Ranguis, Patrick Frédéric et al**
**RHONE POULENC AGROCHIMIE Service DPI B.P. 9163**
**F-69263 Lyon Cédex 09 (FR)**

Le titre de l'invention a été modifié (Directives relatives à l'examen pratiqué à l'OEB, A-III, 7.3)

(54) **Association herbicide.**

(57) L'invention concerne un produit résultant de l'association du triclopyr ou l'une de ses formes estérifiées ou salifiées (A) et d'un dérivé d'acide 2-nitro 5-phenoxy substitué benzoïque notamment l'acifluorfen ou l'acifluorfen sodium (B).

Destruction des mauvaises herbes et des broussailles. Le rapport pondéral (A) : (B) est de préférence compris entre 800 et 1.

EP 0 290 354 A2

## Description

**ASSOCIATION HERBICIDE A BASE DE TRICLOPYR ET D'UN DERIVE D'ACIDE 2-NITRO 5-PHENOXY SUBSTITUE BENZOIQUE.**

L'invention concerne de nouveaux produits résultant de l'association de matières actives, comprenant d'une part au moins un composé choisi parmi les dérivés de l'acide picolinique ou de l'acide 2-pyridyloxy acétique ou une de leurs formes estérifiées ou salifiées et d'autre part une ou plusieurs autres matières actives à groupe phénoxy benzoïque définies ci-après. Elle concerne également un procédé de préparation de ces produits, l'utilisation de ces produits à titre d'herbicide, des compositions herbicides à base de ces produits et un procédé de destruction des mauvaises herbes et des broussailles à base de ces produits.

Les dérivés de l'acide picolinique et de l'acide 2-pyridyloxy acétique sont des herbicides bien connus.

Parmi ces herbicides, on peut citer à titre indicatif le triclopyr décrit notamment dans "The pesticide manual" édité par "The British Crop Protection Council" dont la 7ème édition date de 1983. Son nom chimique est l'acide 3,5,6-trichoro 2-pyridyloxy acétique. Le picloram est décrit également dans la référence citée ci-dessus ; sont nom chimique est l'acide 4-amino-3,5,6 tricloropicolinique. Le clopyralid, décrit dans "the Farm Chemical Handbook" édition de 1986 (72ème édition) a pour nom chimique l'acide 3,6-dichloropicolinique. Le fluroxypyr décrit dans "Herbicide Handbook of the weed science society of America" 5ème édition de 1983, a pour nom chimique l'acide 6-fluro 4-amino 3,5 dichloro 2-pyridyloxyacétique. Cette dernière réference décrit d'ailleurs tous les herbicides sus mentionnés.

Parmi les formes estérifiées, on peut citer pour le triclopyr les esters d'isobutyle, de 2-butoxy éthyle, pour le fluroxypyr, l'ester de 1-méthylheptyle, pour le clopyralid l'ester d'octyle ou de 2-butoxy éthyle.

Parmi les formes salifiées, on peut citer pour le triclopyr le sel de tri (2-hydroxyéthyl) ammonium, pour le picloram les sels de potassium ou d'amines, pour le clopyralid le sel de 2-hydroxyéthyl ammonium.

Il est néanmoins toujours souhaitable d'élargir le domaine d'activité d'un herbicide afin de mieux répondre aux besoins des agriculteurs.

Il est en outre souhaitable de diminuer les doses de ces herbicides nécessaires pour atteindre l'effet recherché.

Un objet de la présente invention est donc de réduire de manière inattendue la quantité efficace des herbicides à base de dérivés de l'acide picolinique et de l'acide 2-pyridyloxy acétique ou de leurs formes estérifiées ou salifiées.

Un autre objet de la présente invention est de proposer des associations révèlant un effet de synergie inattendu.

Un autre objet de la présente invention est de fournir des associations utilisables comme herbicide total en post-émergence notamment contre les mauvaises herbes.

Un autre objet de la présente invention est de fournir des associations utilisables comme herbicide total en post-émergence contre les broussailles, notamment les broussailles suivantes: Rubus Spp (blackberry), Rosa Canina (dog rose), Equisetum Spp, Ailanthus Spp.

D'autres buts et avantages de l'inveniton apparaîtront au cours de la description qui va suivre.

L'invention concerne en premier lieu un produit résultant de l'association d'au moins un composé (A) choisi parmi les dérivés de l'acide picolinique ou de l'acide 2-pyridyloxy acétique ou une de leurs formes estérifiées ou salifiées et d'au moins un dérivé de l'acide 2-nitro, substitué en position 5 par un groupe phénoxy substitué, benzoïque (composé B).

Les composés A répondent notamment à la formule I dans laquelle Q est COOR ou $OCH_2COOR$, R étant un atome d'hydrogène, un groupe alkyle de $C_1$ à $C_8$ éventuellement substitué par un groupement alcoxy inférieur, un métal alcalin ou alcalinoterreux, un ammonium quaternaire mono-, di-, ou tri-substitué par un groupe alkyl inférieur éventuellement mono hydroxylé ; de préference R = H, isobutyle, 2-butoxy éthyle, octyle, mono-, di- ou tri (2-hydroxyéthyl) ammonium, un ion potassium ou sodium

$X_1$ = Cl ou F

$X_2$ = H ou Cl

$X_3$ = H ou $NH_2$

de préférence Q = $OCH_2COOR$ et R = H, isobutyle, 2-butoxy éthyle ou tri-(2-hydroxyethyl) ammonium, $X_1 = X_2$ = Cl et $X_3$ = H.

On préferera donc le triclopyr ou une de ses formes estérifiées ou salifiées indiquées de formule V car le produit obtenu à partir de ce composé présente de remarquables propriétés herbicides.

Les composés B répondent à la formule générale II indiquée en annexe de la description dans laquelle :

$R_1$ = Cl ou F

$R_2$ = Cl ou $CF_3$

$R_3$ = H, Cl, F

P = 0 ou 1.

$R_4$, $R_5$ identiques ou différents, représentent H ou $CH_3$.

$R_6$ = OH, alkoxy (de préférence alkoxy inférieur), ou

OM (M étant un atome alcalin ou alcalino terreux de préférence Na ou K) ou alkyl sulfonamide, de préférence alkyle inférieur sulfonamide.

Au sens du présent texte, on entend que l'adjectif inférieur, lorsqu'il qualifie un radical organique signifie

que ce radical comporte au plus 6 atomes de carbone.

Les radicaux cités ci-avant peuvent être linéaires ou ramifiés.

Les dérivés phénoxybenzoiques sont des herbicides bien connus dans l'art. Ainsi les USP 3979437, 4164408, 4164409, 4164410, 3784635, 4063929, 4093446, 4358308, 4419122, 4419125, 4419124 décrivent de tels herbicides. Ces brevets sont incorporés par référence. Néanmoins dans le cadre de la présente invention l'acifluorfen ou l'acifluorfen sodium de formules III et IV sont préférés car satisfaisant encore mieux aux buts de la présente invention énumérés plus haut.

Avantageusement le rapport pondéral (A) : (B) est compris entre 800 et 1 et de préférence entre 70 et 2,5.

Les associations sont le plus souvent de type binaire (un seul composé A et un seul composé B) mais on peut envisager quelquefois des associations ternaires ou quaternaires avec un ou plusieurs autres pesticides comparables.

Ces produits selon l'invention sont destinés à une utilisation simultanée, séparée ou étalée dans le temps pour le traitement herbicide des végétaux, notamment contre les broussailles et mauvaises herbes.

Dans le cas d'une utilisation simultanée (qui est préférée), il est avantageux d'utiliser des produits prêts à l'emploi contenant l'association des matières actives décrites plus haut. On peut également utiliser des produits préparés juste avant l'emploi, par mélange extemporanné des matières actives ou des compositions contenant chacune des matières actives comme elles sont décrites ci-après.

L'utilisation peut également être espacée dans le temps.

On peut également utiliser le produit en traitant les cultures à protéger successivement par l'une puis l'autre des matières actives (A) et (B) de manière à former in situ sur la plante le produit selon l'invention.

Les produits selon l'invention sont donc utilisables à titre d'herbicides. Ils sont plus particulièrement utiles en post-émergence pour la destruction des mauvaises herbes annuelles et perennes, mono ou dicotylédones et des broussailles. Ces herbes sont également détruites au moyen des compositions décrites ci-après.

Les produits sont préparés par simple mélange de ou des composé(s) A et de ou des composé(s) B.

Pour leur emploi pratique, les matières actives des compositions selon l'invention sont rarement utilisées seules. Le plus souvent ces compositions herbicides, contiennent les matières actives selon l'invention tel que décrit précédemment en association avec les supports solides ou liquides, acceptables en agriculture et les agents tensio-actifs également acceptables en agriculture. En particulieur sont utilisables les supports inertes et usuels et les agents tensio-actifs usuels. Ces compositions font également partie de l'invention.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... ainsi que d'autres matières actives connues à propriétés pesticides (notamment insecticides, fongicides ou herbicides) ou à propriétés régulatrices de la croissance des plantes. Plus généralement les composés utilisés dans l'invention peuvent être associés à tous les additifs solides ou liquides correspondant aux techniques habituelles de la mise en formulation.

Les doses d'emploi des composés utilisés dans l'invention peuvent varier dans de larges limites, ment selon la nature des adventices à éliminer et le degré d'infestation des zones devant être desherbées.

D'une façon générale, les compositions selon l'invention contiennent habituellement de 0,05 à 95% environ des produits selon l'invention, de 1 % à 95 % environ de un ou plusieurs supports solides ou liquides et éventuellement de 0,1 à 50% (de préférence 5 à 40 %) environ de un ou plusieurs agents tensioactifs.

Selon ce qui a déjà été dit les produits utilisés dans l'invention sont généralement associées à des supports et éventuellement des agents tensioactifs.

Par le terme "support". dans le présent exposé, on désigne une matière organique ou minérale, naturelle ou synthétique, avec laquelle les matières actives sont associées pour faciliter leur application sur la plante, sur des graines ou sur le sol. Ce support est donc généralement inerte et il doit être acceptable en agriculture, notamment sur la plante traitée.

Comme supports solides (ou charges) on peut citer les charges minérales ou synthétiques telles que le kaolin, l'attapulgite, la montmorillonite, la bentonite, le talc, la terre à foulon, la terre de diatomée, le kieselguhr, les carbonates de calcium et de magnésium, la silice synthétique précipitée, l'alumine, les silicates et silicoaluminates alcalins, les résines, cires, engrais solides. On peut aussi utiliser des charges hydrosolubles telles que les sulfates de sodium ou d'ammonium et l'urée.

Comme supports liquides on peut citer l'eau, les alcools (notamment le butanol), les esters (notamment l'acétate de méthyl-glycol), les cétones (notamment la cyclohexanone et l'isophorone), les fractions de pétrole, les hydrocarbures aromatiques (notamment les xylènes), ou paraffiniques) les hydrocarbures chlorés aliphatiques (notamment le trichloroéthane) ou aromatiques (notamment les chlorobenzènes), les solvants hydrosolubles tels que le diméthylformamide, le diméthylsulfoxyde, la N-méthyl-pyrrolidone.

L'agent tensioactif peut être un agent émulsionnant, dispersant ou mouillant de type ionique ou non ionique ou un mélange de tels agents tensioactifs.

Comme agents mouillants non ioniques on peut ainsi citer les alkylphénols polyéthoxylés (notamment les octyl-, nonyl- et tributyl- phénols ayant de 6 à 18 motifs oxyéthylène), les alcools gras polyéthoxylés (notamment les alcools de $C_{10}$ à $C_{18}$ ayant de 6 à 18 motifs oxyéthylène), les amines grasses polyéthoxylées (notamment l'amine de suif, ou tall oil, ayant de 2 à 40 motifs oxyéthylène), les esters d'acides gras et de polyols (de type glycérine ou sucres) polyéthoxylés (notamment les laurate et stéarate de sorbiton ayant de 5 à 20 motifs oxyéthylène).

Comme agents mouillants anioniques, on peut citer les sels-esters alkylnaphtalène sulfonates (notamment

les isopropyl-, butyl- et dibutylnaphtalène sulfonate de sodium ou de potassium, les sels-esters sulfates d'alcools gras (notamment les laurylsulfates de sodium ou de potassium), les sels-esters sulfosuccinates d'alcools gras (notamment les dioctyl-sulfosuccinates de sodium ou de potassium), les dérivés de la taurine (notamment les alkyltaurates, les aryl-N-méthyltaurides, l'oleylméthyltauride de sodium).

Comme agents dispersants non ioniques, on peut citer les arylphénols polyéthoxylés (notamment les di- et tri-(phényléthyl) phénols comprenant 18 à 40 motifs oxyéthylène.

Comme agents dispersants anioniques, on peut citer les polymères polycarboxyliques salifiés (tels que les polymères polycarboxylates et polyacrylates de sodium), les polycondensats de formol et diphénolsulfonates ou d'alkylnaphtalène sulfonates (notamment de méthylnaphtalène sulfonate de sodium), les esters-sels ou acides phosphoriques d'alkyl- ou aryl-phénols polyoxyéthylénés (notamment les esters phosphoriques de nonylphénols ayant 6 à 18 motifs oxyéthylène sous forme acide ou sel de potassium ainsi que les esters phosphoriques de di- ou tri-(phényléthyl) phénol ayant 18 à 40 motifs oxyéthylène sous forme acide ou sel), les alcools gras polyoxyéthylénés phosphatés (notamment les alcools gras $C_{11}$ à $C_{19}$ ayant 6 à 18 motifs oxyéthylène), les lignosulfonates alcalins ou alcalinoterreux.

Les compositions selon l'invention, surtout lorsqu'il s'agit de granulés autodispersibles, peuvent aussi contenir de 1 à 50 % en poids de liant naturel ou synthétique.

Comme liant naturel, on peut citer l'amidon et ses dérivés (notamment l'amidon moidifié et la dextrine), les dérivés de la cellulose (notamment la carboxyméthylcellulose, l'hydroxyéthylcellulose, l'hydroxypropylméthylcellulose), les sucres (comme le lactose, le mannitol, le sorbitol), les gommes (telles que la gomme arabique et les gommes xanthane).

Comme liant synthétique, on peut citer les polymères (notamment l'alcool polyvinylique, le polyacétate de vinyle, la polyvinylpyrrolidone, les polyacrylates alcalins), les polycondensats (spécialement les polyéthers tels que les polyglycols ; les copolycondensats d'anhydride maléïque ; les polycondensats de formol et d'alkylnaphtalène sulfonates, tels que le polycondensat de formol et de méthylnaphtalène sulfonate de sodium), les lignosulfonates alcalins.

La présence d'au moins un agent tensioactif dans les compositions selon l'invention est généralement indispensable lorsque les matières actives et/ou le support inerte ne sont pas solubles dans l'eau et que l'agent vecteur de l'application est l'eau.

Pour leur application, les compositions selon l'invention sont sous des formes assez diverses, solides ou liquides ; il s'agit de formes relativement diluées, tandis que les compositions convenables pour le transport, le commerce et le stockage sont plutôt des compositions concentrées.

Comme formes de compositions solides, on peut citer les poudres mouillables et les poudres pour poudrage (à teneur en matières actives pouvant aller jusqu'à 100 %) et les granulés (de préférence autodispersibles), notamment ceux obtenus par extrusion, par compactage, par imprégnation d'un support granulé, par granulation à partir d'une poudre (la teneur en matières actives de formule (I) et de groupe (II) dans ces granulés étant entre 0,5 et 80 % pour ces derniers cas).

Comme formes de compositions liquides ou destinées à constituer des compositions liquides lors de l'application, on peut citer les solutions aqueuses, les concentrés émulsionnables et les suspensions concentrées ou encore les pâtes.

Les suspensions concentrées, qui sont applicables en pulvérisation, sont préparées de manière à obtenir un produit fluide stable ne se déposant pas (broyage fin) et elles contiennent habituellement de 10 à 75 % de matières actives, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhesifs et, comme support, de l'eau ou un liquide organique dans lequel les matières actives sont peu solubles ou non solubles : certaines matières solides organiques ou des sels minéraux peuvent être dissous dans le support pour aider à empêcher la sédimentation ou comme antigels pour l'eau.

A titre d'exemple, voici une composition de suspension concentrée (Exemple 1) :

- matières actives 500 g
- phosphate de tristyrylphénol polyéthoxylé 50 g
- alkylphénol polyéthoxylé 50 g
- polycarboxylate de sodium 20 g
- éthylène glycol (antigel) 50 g
- huile organopolysiloxanique (antimousse) 1 g
- polysaccharide (épaississant) 1,5 g
- eau 316,5 g

Les concentrés émulsionnables ou solubles comprennent le plus souvent 10 à 80 % de matière active, les émulsions ou solutions prêtes à l'application contenant, quant à elles, 0,001 à 20 % de matière active.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... ainsi que d'autres matières actives (connues à propriétés pesticides (notamment insecticides ou fongicides) ou à propriétés favorisant la croissance des plantes (notamment des engrais) ou à propriétés régulatrices de la croissance des plantes. Plus généralement les composés selon l'invention peuvent être associés à tous les additifs solides ou liquides correspondant aux techniques habituelles de la mise en formulation.

Par exemple, en plus du solvant, les concentrés émulsionnables peuvent contenir quand c'est nécessaire, 2

à 20 % d'additifs appropriés comme les stabilisants, les agents tensio-actifs, les agents de pénétration, les inhibiteurs de corrosion, les colorants ou les adhésifs précédemment cités.

A partir de ces concentrés, on peut obtenir par dilution avec de l'eau des émulsions de toute concentration désirée, qui conviennent particulièrement à l'application sur les cultures.

A titre d'exemple, voici la composition de quelques concentrés émulsionnables :

Exemple (formulation) 2 - matières actives 400 g/l
- dodécylbenzène sulfonate alcalin 24 g/l
- nonylphénol oxyéthylé à 10 molécules d'oxyde d'éthylène 16 g/l
- cyclohexanone 200 g/l
- solvant aromatique q.s.p 1 litre

Selon une autre formule de concentré émulsionnable, on utilise :

Exemple F 3 : - matières actives 250 g
- huile végétale époxydée 25 g
- mélange de sulfonate d'alcoylaryle et d'éther de polyglycol et d'alcools gras 100 g
- diméthylformamide 50 g
- xylène 575 g

A partir de ces concentrés, on peut obtenir par dilution avec de l'eau des émulsions de toute concentration désirée, qui conviennent particulièrement à l'application sur les feuilles.

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des agents de pénétration, des adhésifs, ou des agents antimottants, colorants, etc...

A titre d'exemple, voici diverses compositions de poudres mouillables (ou poudres à pulvériser) :

Exemple F 4 : - matières actives 50 %
- alcool gras éthoxylé (agent mouillant) 2,5 %
- phényléthylphénol éthoxylé (agent dispersant) 5 %
- craie (support inerte) 42,5 %

Exemple F 5 : - matières actives 10 %
- alcool synthétique oxo de type ramifié, en $C_{13}$ éthoxylé par 8 à 10 oxyde d'éthylène (agent mouillant) 0,75 %
- lignosulfonate de calcium neutre (agent dispersant 12 %
- carbonate de calcium (charge inerte) q.s.p. 100 %

Exemple F 6 : cette poudre mouillable contient les mêmes ingrédients que dans l'exemple précédent, dans les proportions ci-après : - matières actives 75 %
- agent mouillant 1,50 %
- agent dispersant 8 %
- carbonate de calcium (charge inerte) q.s.p. 100 %

Exemple F 7 : - matières actives 90 %
- alcool gras éthoxylé (agent mouillant) 4 %
- phényléthylphénol éthoxylé (agent dispersant) 6 %

Exemple F 8 : - matières actives 50 %
- mélance de tensio-actifs anioniques et non ioniques (agent mouillant) 2,5 %
- lignosulfonate de sodium (agent dispersant) 5 %
- argile kaolinique (support inerte) 42,5 %

Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les feuilles des végétaux.

A la place des poudres mouillables, on peut réaliser des pâtes. Les conditions et modalités de réalisation et d'utilisation de ces pâtes sont semblables à celles des poudres mouillables on poudres à pulvériser.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistence épaisse comme celle d'une "mayonnaise".

Les composés selon l'invention peuvent être avantageusement formulés sous la forme de granulés dispersibles dans l'eau également compris dans le cadre de l'invention.

Ces granulés dispersibles, de densité apparente généralement comprise entre environ 0,3 et 0,6, ont une dimension de particules généralement comprise entre environ 150 et 2000 et de préférence entre 300 et 1500 microns.

La teneur en matière active de ces granulés est généralement comprise entre environ 1 % et 90 %, et de préférence entre 25 % et 90 %.

Le reste du granulé est essentiellement composé d'une charge solide et éventuellement d'adjuvants tensio-actifs conférant au granulé des propriétés de dispersibilité dans l'eau. Ces granulés peuvent être essentiellement de deux types distincts selon que la charge retenue est soluble ou non dans l'eau. Lorsque la charge est hydrosoluble, elle peut être minérale ou, de préférence, organique. On a obtenu d'excellents résultats avec l'urée. Dans le cas d'une charge insoluble, celle-ci est de préférence minérale, comme par exemple le kaolin ou la bentonite. Elle est alors avantageusement accompagnée d'agents tensio-actifs (à raison de 2 à 20 % en poids du granulé) dont plus de la moitié est, par exemple, constituée par au moins un agent dispersant, essentiellement anionique, tel qu'un polynaphtalène sulfonate alcalin ou alcalino terreux ou un lignosulfonate alcalin ou alcalino-terreux, le reste étant constitué par des mouillants non ioniques ou anioniques tel qu'un alcoyl naphtalène sulfonate alcalin ou alcalino-terreux.

Par ailleurs, bien que cela ne soit pas indispensable, on peut ajouter d'autres adjuvants tels que des agents anti-mousse.

Le granulé selon l'invention peut être préparé par mélange des ingrédients nécessaires puis granulation selon plusieurs techniques en soi connues (drageoir, lit fluide, atomiseur, extrusion, etc..). On termine généralement par un concassage suivi d'un tamisage à la dimension de particule choisie dans les limites mentionnées ci-dessus.

De préférence, il est obtenu par extrusion, en opérant comme indiqué dans les exemples ci-après.

Exemple F 9 : Granulés dispersibles

Dans un mélangeur, on mélange 90 % en poids de matières actives et 10 % d'urée en perles. Le mélange est ensuite broyé dans un broyeur à broches. On obtient une poudre que l'on humidifie avec environ 8 % en poids d'eau. La poudre humide est extrudée dans une extrudeuse à rouleau perforé. On obtient un granulé qui est séché, puis concassé et tamisé, de façon à ne garder respectivement que les granulés d'une dimension comprise entre 150 et 2000 microns.

Exemple F 10 : Granulés dispersibles

Dans un mélangeur, on mélange les constituants suivants :

- matières actives 75 %
- agent mouillant (alkylnaphtalène sulfonate de sodium 2 %
- agent dispersant (polynaphtalène sulfonate de sodium) 8 %
- charge inerte insoluble dans l'eau (kaolin) 15 %

Ce mélange est granulé en lit fluide, en présence d'eau, puis séché, concassé et tamisé de manière à obtenir des granulés de dimension comprise entre 0,15 et 0,80 mm.

Ces granulés peuvent être utilisés seuls, en solution ou dispersion dans de l'eau de manière à obtenir la dose cherchée. Ils peuvent aussi être utilisés pour préparer des associations avec d'autres matières actives, notamment fongicides, ces dernières étant sous la forme de poudres mouillables, ou de granulés ou suspensions aqueuses.

Les composés de formule (I) peuvent encore être utilisés sous forme de poudres pour poudrage ; on peut aussi utiliser une composition comprenant 50 g de matière active et 950 g de talc ; on peut aussi utiliser une composition comprenant 20 g de matière active, 10 g de silice finement divisée et 970 g de talc ; on mélange et broie ces constituents et on applique le mélange par poudrage.

En ce qui concerne les compositions adaptées au stockage et au transport, elles contiennent plus avantageusement de 0,5 à 95 % (en poids) de substance active.

Ainsi donc, les compositions à usage agricole selon l'invention peuvent contenir les matières actives selon l'invention dans de très larges limites, allant de 0,05 à 95 % (en poids). Leur teneur en agent tensio-actif est avantageusement comprise entre 5 % et 40 % en poids.

Bien entendu, l'homme de métier choisira pour chaque association les compositions adaptées. Il sera ainsi avantageux dans le cas où l'une des matières actives est un sel et l'autre un ester ou un acide, d'utiliser une poudre mouillable. Dans le cas où les deux matières actives sont des sels une solution aqueuse conviendra. Dans le cas où les deux matières actives sont sous forme d'ester ou d'acide les concentrés émulsionnables, les granulés dispersibles pourront être par exemple utilisés.

Les doses d'emploi dans le cas d'une utilisation comme herbicide des produits selon l'invention peuvent

varier dans de larges limites selon la densité des végétaux à détruire notamment selon la densité des mauvaises herbes.

L'invention a également pour objet un procédé de destruction des mauvaises herbes et broussailles par application de préférence foliaire d'un produit selon l'invention tel qu'il a été défini plus haut.

De préférence on applique le produit à raison de 100 à 800 g/ha pour (A) et 1 à 100 g/ha pour B, de préférence 200 à 700 g/ha pour (A) et 10 à 80 g/ha pour (B).

On applique de préférence ce produit par pulvérisation sous la forme d'un concentré émulsionnable ou d'une solution.

On sait que la dose minimum d'emploi du triclopyr est 90 g/hl soit environ 900 g/ha. Le déposant a noté que l'association du triclopyr ou une de ses formes estérifiées ou salifiées avec un dérivé B permettait de notablement diminuer cette dose.

Les exemples ci-dessous illustrent l'invention pour le cas particulier du triclopyr : on a réalisé une première bouillie (1) en mélangeant 375 ml de concentré émulsionable qui comprend 240 g d'acide sous forme d'ester de 2-butoxy éthyle de triclopyr par litre et 99,625 litre d'eau de manière à obtenir une concentration de triclorpyr de 90 g/hl.

On forme une seconde bouillie (2) par mélange de 208 ml du concentré émulsionnable comprenant 240 g/l de triclopyr acide sous forme d'ester de 2-butoxy éthyle et 20,8 ml d'une solution aqueuse qui comporte 240 g/l d'acifluorfen sodium. On a donc 50 g/hl de triclopyr et 5 g/hl d'acifluorfen sodium. On complète à 1 hl en ajoutant donc 99,77 l.

On applique (1) et (2) en pulvérisations à 1000 l/ha sur des parcelles élémentaires de 10 m2 (2 x 5 m) parsemées de Rubus fructicosus (ronce). On a donc appliqué une dose de 900 g/ha de triclopyr dans le cas de (1) et 50 g/ha d'acifluorfen additionné à 500 g/ha de triclorpyr dans le cas de (2).

Les essais sont répétés trois fois et les résultats sont réunis dans le tableau ci-dessous. Les chiffres indiqués sont des pourcentages de distinction.

Le tableau montre clairement la diminution de dose du composé (A) obtenu par mélange avec l'acifluorfen sodium.

| TRAITEMENTS | 7 JOURS | | 14 JOURS | | 24 JOURS | |
|---|---|---|---|---|---|---|
| | 0 | | 0 | | 0 | |
| Témoin non traité | 0 | 0 | 0 | 0 | 0 | 0 |
| | 0 | | 0 | | 0 | |
| Ester isobutyle du | 20 | | 50 | | 90 | |
| TRICLOPYR | 10 | 16,66 | 40 | 46,66 | 85 | 88,33 |
| 90 g/HL | 20 | | 50 | | 90 | |
| Ester isobutyle du | 20 | | 70 | | 95 | |
| TRICLOPYR 50 g/hl | 20 | 20 | 60 | 70 | 90 | 93,33 |
| + ACIFLUORFEN 5 g/hl | 20 | | 80 | | 95 | |

On a réalisé une troisième bouillie (3) en mélangeant 400 ml de concentré émulsionnable qui comprend 240 g d'acide sous forme d'ester de 2-butoxy éthyle de triclopyr par litre et 99,600 litre d'eau de manière à obtenir une concentration de triclorpyr de 96 g/hl.

On forme une quatrième bouillie (4) par mélange de 200 ml du concentré émulsionnable comprenant 240 g/l de triclopyr acide sous forme d'ester de 2-butoxy éthyle et 50 ml d'une solution aqueuse qui comporte 240 g/l d'acifluorfen sodium. On a donc 48 g/hl de triclopyr et 12 g/hl d'acifluorfen sodium. On complète à 1 hl en ajoutant donc 99,31.

On applique (3) et (4) en pulvérisations à 1000 l/ha sur des parcelles élémentaires de 10 m2 (2 x 5 m) parsemées respectivement de Rubus Spp (blackberry), Rosa Canina (dog rose), Equisetum Spp, Ailanthus Spp. On a donc appliqué une dose de 960 g/ha de triclopyr dans le cas de (3) et 120 g/ha d'acifluorfen

additionné à 480 g/ha de triclorpyr dans le cas de (4).

Les résultats sont réunis dans le tableau ci-dessous.

Le tableau montre clairement la diminution de dose du composé (A) obtenu par mélange avec l'acifluorfen sodium.

| matière active | dose m. a. | Rubus spp | Rosa canina | Equisetum spp | Ailanthus spp |
|---|---|---|---|---|---|
| A | 960 | 91 | 50 | 97,5 | 70 |
| A + B | 480 + 120 | 98 | 85 | 100 | 70 |

Les formulations suivantes présentent également un excellent effet herbicide dans les mêmes conditions d'expérimentation que précédemment :

Concentré émulsionnable

A un concentré émulsionnable comprenant 240 g d'acide sous forme d'ester de 2-butoxy éthyle de triclopyr par litre on ajoute 24 g d'acifluorfen.

Poudre mouillable

| Pour 100 g | % en poids |
|---|---|
| TRICLOPYR (2-BUTOXYETHYL) ......... | 27,8 |
| ACIFLUORFEN Na .................... | 2,12 |
| ALKYLNAPHTALENE SULFONATE DE CALCIUM | 1,5 |
| LIGNOSULFONATE DE Na .............. | 4,5 |
| ANTIMOUSSE ........................ | 35 |
| KAOLIN ............................ | 29,08 |

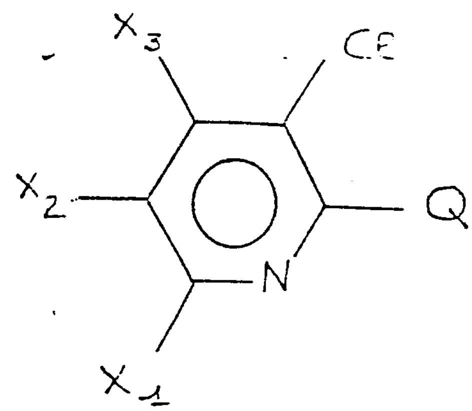

I

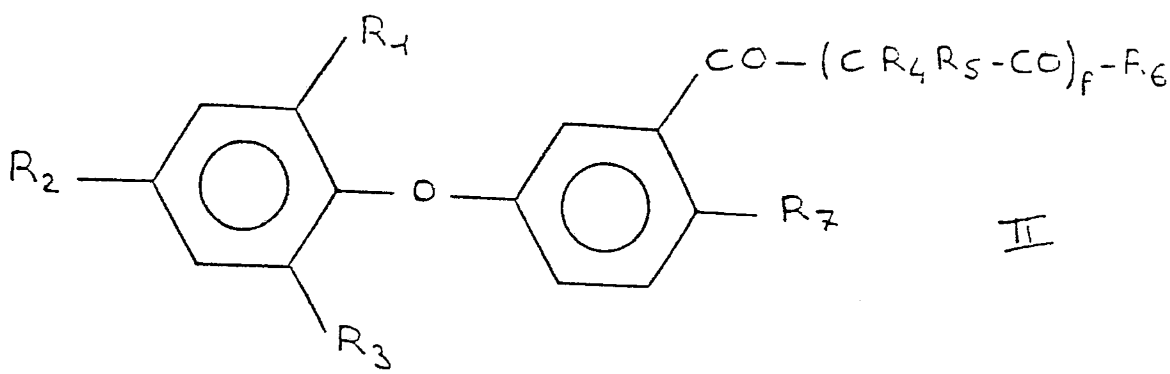

II

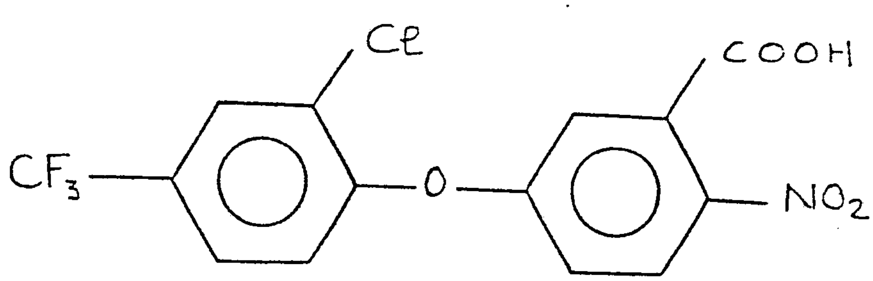

III

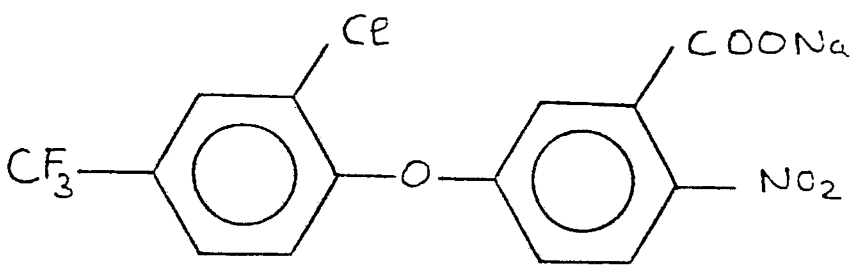

IV

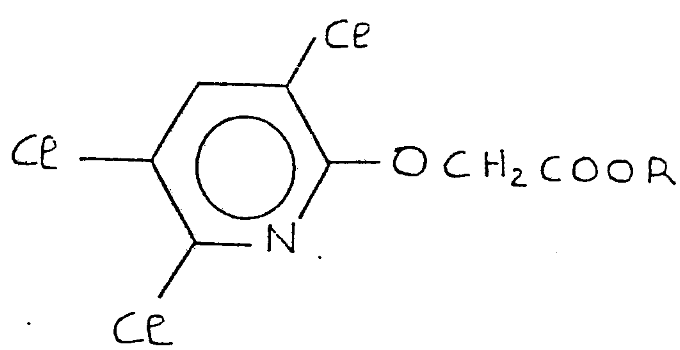

V

**Revendications**

1) Produit constitué de l'association d'au moins un composé (A) choisi parmi les dérivés de l'acide picolinique ou de l'acide 2-pyridyloxy acétique ou une de leurs formes estérifiées ou salifiées et d'au moins un dérivé de l'acide 2-nitro, substitué en position 5 par un groupe phénoxy substitué, benzoïque.

2) Produit selon la revendication 1, caractérisé en ce que le composé (A) répond à la formule (I) dans laquelle Q est COOR ou $OCH_2COOR$ R étant un atome d'hydrogène, un groupe alkyle de $C_1$ à $C_8$ éventuellement substitué par un groupement alcoxy inférieur, un métal alcalin ou alcalinoterreux, un ammonium quaternaire mono-, di-, tri-substitué par un groupe alkyle inférieur éventuellement mono hydroxylé ; de préférence R = H, isobutyle, 2-butoxy éthyle, octyle, mono-, di- ou tri (2-hydroxyethyl) ammonium, un ion potassium ou sodium
$X_1$ = Cl ou F
$X_2$ = H ou Cl
$X_3$ = H ou $NH_2$
de préférence Q = $OCH_2COOR$ et R = H, isobutyle, 2-butoxy éthyle ou tri-(2-hydroxyethyl) ammonium, $X_1 = X_2$ = Cl et $X_3$ = H.

3) Produit selon la revendication 2, caractérisé en ce que le composé B répond à la formule II dans laquelle
$R_1$ = Cl ou F
$R_2$ = Cl ou $CF_3$
$R_3$ = H, Cl, F
P = 0 ou 1.
$R_4$, $R_5$ identiques ou différents, représentent H ou $CH_3$.
$R_6$ = OH, alkoxy (de préférence alkoxy inférieur).
OM (M étant un atome alcalin ou alcalino terreux de préférence Na ou K) ou alkyl sulfonamide, de préférence alkyle inférieur sulfonamide.

4. Produit selon la revendication 1, caractérisé en ce que le dérivé de l'acide 2-nitro 5-substitué phenoxy benzoïque est l'acifluorfen ou l'acifuorfen sodium.

5) Produit selon la revendication 1 caractérisé en ce que le rapport pondéral (A) : (B) est compris entre 800 : 1 et 100 : 100, de préférence entre 700 : 10 et 200 : 80.

6) Produit selon l'une des revendications 1 à 5 pour une utilisation simultannée, séparée ou étalée dans le temps en traitement herbicide des végétaux.

7) Utilisation des produits selon l'une des revendications 1 à 6 à titre d'herbicide.

8) Utilisation selon la revendication 7 à titre d'herbicide de post-emergence.

9) Composition herbicide comprenant un produit selon l'une des revendications 1 à 6 et au moins un support inerte acceptable en agriculture et/ou un agent tensio-actif acceptable en agriculture.

10)Composition selon la revendication 9, caractérisée en ce qu'elle est sous la forme de suspension concentrée, ou concentré émulsionable, de poudre mouillable, de solution aqueuse selon la nature des composés (A) et (B).

11)Composition selon l'une des revendications 9 ou 10, caractérisée en ce qu'elle comprend entre 0,05 et 95 % en poids de produit selon l'une des revendications 1 à 6.

12)Procédé de destruction de mauvaises herbes et des broussailles par application foliaire d'un produit selon l'une des revendications 1 à 6 ou d'une composition selon l'une des revendications 10 à 11.

13)Procédé selon la revendication 12, caractérisé en ce que on applique le produit à raison de 100 à 800 g/ha pour (A) et 1 à 100 g/ha pour B, de préférence 200 à 700 g/ha pour (A) et 10 à 80 g/ha pour (B).

14)Procédé selon l'une les revendications 12 ou 13, caractérisé en ce que l'application est assurée par pulvérisation.

15)Procédé de préparation du produit selon l'une des revendications 12 à 14, caractérisé en ce que l'on mélange au moins un composé (A) avec au moins un dérivé de l'acide 2-nitro 5-substitué phénoxybenzoïque (B).